Europäisches Patentamt

(19) European Patent Office

Office européen des brevets

(11) Numéro de publication: **0 040 648**
**B1**

(12) **FASCICULE DE BREVET EUROPEEN**

(45) Date de publication du fascicule du brevet:
14.08.85

(21) Numéro de dépôt: **80200475.4**

(22) Date de dépôt: **22.05.80**

(51) Int. Cl.⁴: **G 01 B 11/27,** G 01 B 11/16, F 01 D 21/04

(54) **Procédé et dispositif de détection de défaut d'alignement d'arbres mécaniques.**

(43) Date de publication de la demande:
**02.12.81 Bulletin 81/48**

(45) Mention de la délivrance du brevet:
**14.08.85 Bulletin 85/33**

(84) Etats contractants désignés:
**AT BE CH DE FR GB IT LI LU NL SE**

(56) Documents cités:
**CH - A - 163 093**
**FR - A - 2 425 627**
**US - A - 3 388 889**
**US - A - 3 517 999**
**US - A - 3 806 734**

(73) Titulaire: **ATELIERS DE CONSTRUCTIONS ELECTRIQUES DE CHARLEROI (ACEC) Société Anonyme, Avenue Lloyd George 7, B-1050 Bruxelles (BE)**

(72) Inventeur: **Houtet, Franz, Rue des Fougères, 148, B-6110-Montigny-Le-Tilleul (BE)**

(74) Mandataire: **Bossard, Franz et al, ACEC - Service des Brevets Boîte Postale 4, B-6000 Charleroi (BE)**

## Description

La présente invention concerne un procédé tel que défini dans le préambule de la revendication 1. Elle concerne aussi un dispositif tel que défini dans le préambule des revendications 2 ou 4. Un procédé et un dispositif de mêmes types sont connus de US-A-3 388 889.

Pour protéger les aubes directrices orientables des turbines contre les déformations permanentes ou contre les bris couteux et difficiles à réparer suite à des blocages occasionnés par des objets véhiculés par le fluide canalisé, on équipe les dispositifs de commande des aubes orientables de pièces mécaniques à section résistante localement réduite qui font office de «fusibles mécaniques». De la sorte, en cas de blocage d'une aube par un corps étranger le dispositif de commande de cette aube se rompt à un endroit connu, facilement accessible et de remplacement commode. Pour déceler le bris de ces fusibles, il existe de nombreux dispositifs de détection utilisant souvent des interrupteurs disposés à proximité des pièces susceptibles de se rompre. Lorsqu'un bris survient, un des morceaux de la pièce cassée heurte l'interrupteur qui déclenche l'alarme. Ces dispositifs de détection sont sensibles à l'humidité et donnent souvent des alarmes intempestives. D'autre part, pour que ces interrupteurs puissent fonctionner, il faut un déplacement suffisant d'une des pièces brisées; il y a donc risque d'alarme tardive. Pour suppléer à ces défauts d'autres dispositifs de détection ont été aménagés, ils comprennent notamment des éléments mécaniques de transmission qui, prenant appui de part et d'autre de la section résistante localement réduite du fusible, sont aménagés de telle manière que la position de ces éléments mécaniques de transmission se modifie amplement par suite du bris du fusible mécanique. De la sorte l'écart de position de ces éléments mécaniques de transmission est enregistré par un détecteur adéquat, par exemple un inducteur capacitif ou inductif.

Le montage de ces éléments mécaniques de transmission demande un réglage délicat et risque de se dégrader au cours du temps par usure, par fatigue due aux vibrations, par corrosion, par encrassement ou même par écarts excessifs de température. Il en résulte de fausses alarmes entraînant l'arrêt des machines pour vérifications, réglages ou remplacement éventuel de ces éléments mécaniques de transmission.

Selon US-A-3 388 889 un contrôle d'alignement d'un arbre est effectué en détectant la rupture d'un circuit électrique installé dans un canal central de l'arbre. De FR-A-2 425 627 il est connu de détecter des flexions d'un élément structurel d'un avion à l'aide d'une déviation d'un faisceau lumineux dirigé vers ledit élément.

La présente invention remédie à ces inconvénients. Non seulement, elle contribue à déceler un bris ou une déformation permanente de pièces mécaniques soumises à des efforts importants, mais encore elle signale les déformations élastiques atteignant un seuil prédéterminé de déformation.

Selon l'invention, le procédé et le dispositif mentionnés ci-dessus comportent respectivement les caractéristiques de la revendication 1 et des revendications 2 ou 4.

Cette invention est basée sur l'utilisation d'une ou de plusieurs cellules photoélectriques montées, selon un même axe optique, à l'intérieur de la pièce mécanique à surveiller. Le faisceau lumineux joignant la partie émettrice à la partie réceptrice est concentré au moyen d'un ou de plusieurs diaphragmes et est dévié au point de ne plus atteindre la partie réceptrice lorsqu'une déformation mécanique dépasse une certaine valeur définie à l'avance.

L'invention est exposée plus en détails à l'aide des figs 1, 2 et 3.

La fig. 1 montre un exemple de réalisation utilisant deux cellules photoélectriques.

La fig. 2 montre un exemple de réalisation utilisant une cellule photoélectrique.

La fig. 3 montre un exemple d'application dans le cas d'un distributeur de turbine hydraulique.

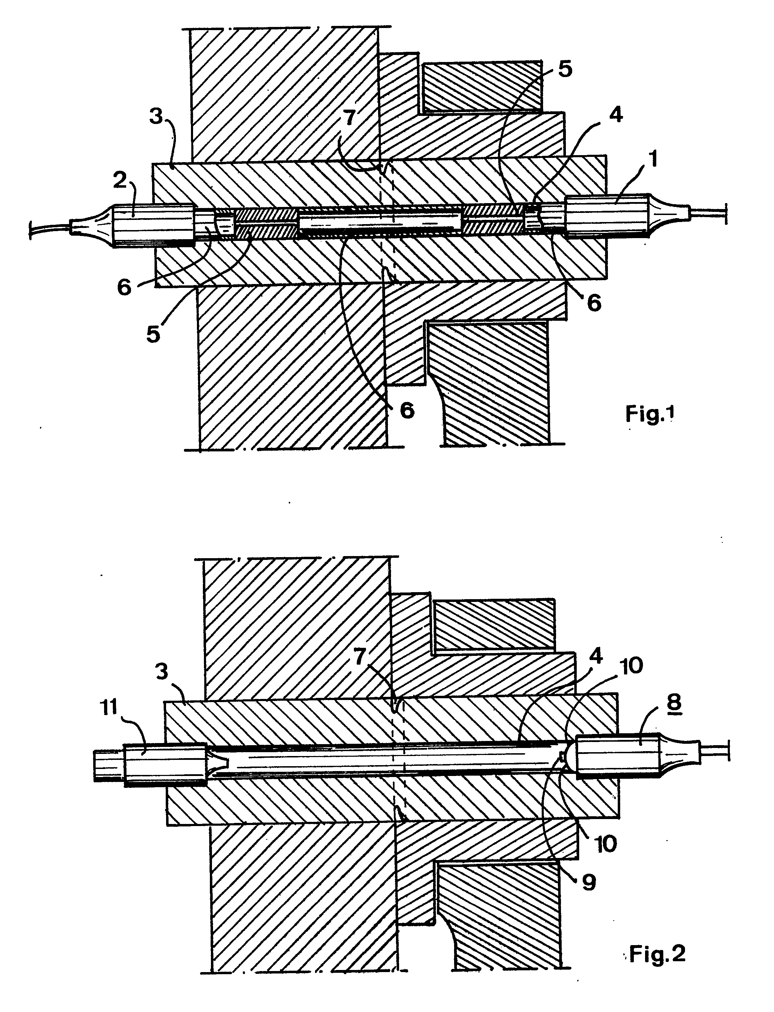

Le dispositif de détection de défaut d'alignement représenté à la fig. 1 est constitué d'une cellule photoélectrique émettrice 1 et d'une cellule photoélectrique réceptrice 2 logées co-axialement aux extrémités d'un même arbre 3 percé d'un trou central 4. Dans ce trou central 4 sont enfilés deux diaphragmes 5 maintenus en place par des entretoises 6. L'arbre 3 porte localement une encoche 7 qui réduit la section résistante de l'arbre 3 et en fait un véritable fusible mécanique puisqu'il constitue, dans la chaîne cinématique transmettant l'effort, un point faible parfaitement localisé.

Le faisceau lumineux émis par la cellule émettrice 1 est, selon la position des diaphragmes 5, leur longueur et leur diamètre intérieur, aminci de façon à ce que la cellule réceptrice 2 ne reçoive plus ce faisceau lumineux lorsque la déformation de l'arbre 3 atteint un niveau préétabli. Si la déformation de l'arbre 3 se situe en régime élastique, l'information donnée par la cellule réceptrice 2 sera temporaire. Si au contraire, la déformation de l'arbre 3 est permanente ou s'il y a bris de l'arbre 3, le faisceau lumineux sera définitivement interrompu et la cellule réceptrice 2 accusera le fait de façon permanente.

La fig. 2 représente un dispositif de défaut d'alignement se composant d'une cellule 8, émettrice en sa partie centrale 9 et réceptrice en sa partie extérieure 10, et d'un miroir 11 qui réfléchit le faisceau lumineux émis par la partie émettrice 9 vers la partie réceptrice 10. Dès qu'il y a flexion de l'arbre 3, une première partie du faisceau lumineux incident tombe en dehors de la surface du miroir 11 tandis que l'autre partie du faisceau lumineux atteignant le miroir 11 est réfléchie suivant un angle différent et n'atteint plus la partie réceptrice 10 de la cellule photoélectrique 8, Il y a donc interruption du faisceau lumineux. Cette interruption est passagère ou définitive selon la nature du changement survenu à l'arbre 3. Entre la cellule photoélectrique 8 et le miroir 11, on peut aussi disposer un diaphragme approprié pour augmenter encore la sensibilité du dispositif. Dans la fig. 2, l'arbre 3 porte une encoche 7 réduisant fortement sa section résistante. Mais il est évident que l'invention trouve également son application pour un arbre lisse démuni d'encoche 7.

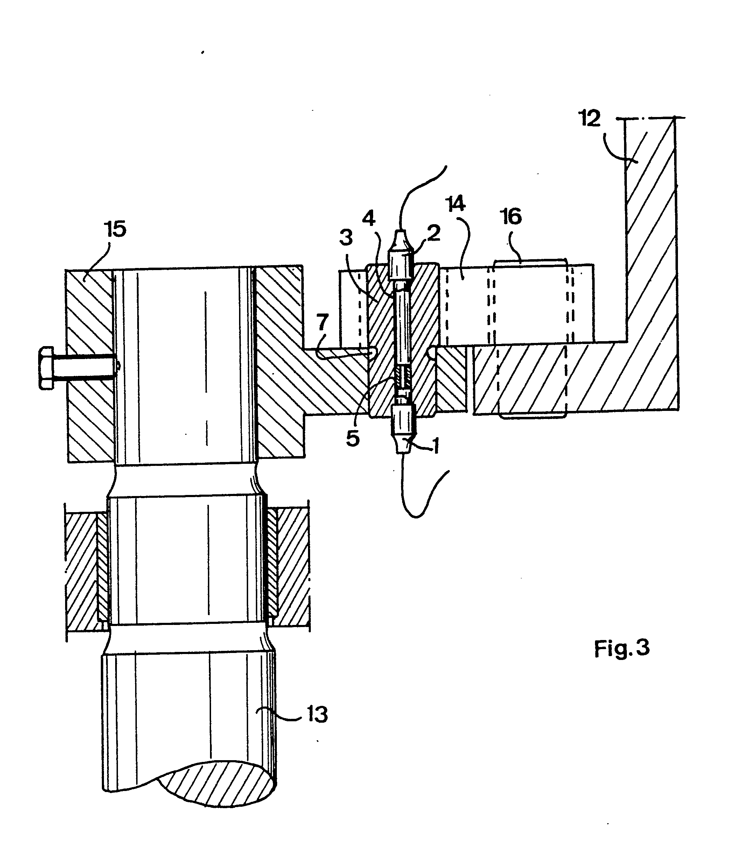

La fig. 3 montre une application du dispositif de détection de défaut d'alignement pour une commande des aubes directrices orientables d'un distributeur de turbine hydraulique. Un cercle de vannage 12 commande une aube orientable, représentée sur la fig. 3 par la partie supérieure de son axe 13, par l'intermédiaire d'une bielle 14 et d'un levier de commande 15 solidarisé à l'axe 13 de l'aube orientable.

L'axe mécanique 3 permettant l'articulation de la bielle 14 par rapport au levier de commande 15 est équipé d'un dispositif de détection de défaut d'alignement comprenant une cellule photoélectrique émettrice 1, une cellule photoélectrique réceptrice 2 enfilées aux extrémités d'un trou central 4 de l'axe mécanique 3 et séparées l'une de l'autre par un diaphragme 5. L'axe mécanique 3 est entaillé d'une encoche 7 à un endroit judicieusement choisi pour constituer le point faible de la transmission d'effort du cercle de vannage 12 à l'aube orientable 13. De la sorte, si un corps étranger vient coincer l'aube orientable 13 au moment où le cercle de vannage 12 commande le déplacement de toutes les aubes orientables, la rupture de l'axe mécanique désolidarise l'aube du cercle de vannage 12 et permet l'exécution de la commande; à savoir: orienter les autres aubes pour adapter le distributeur au débit demandé. La rupture de l'axe mécanique 3 est signalée instantanément par l'interruption du faisceau lumineux allant de la cellule émettrice 1 à la cellule réceptrice 2.

A l'interruption de ce faisceau lumineux correspond une alarme localisant la rupture survenue en cours de manœuvre et permettant de prendre les mesures appropriées.

Il est évident que le dispositif de détection représenté sur la fig. 3 peut être aménagé sur l'axe mécanique 16 qui sert d'articulation entre le cercle de vannage 12 et la biellette 14 du distributeur.

En d'autres termes, dans la chaîne cinématique constituée du cercle de vannage 12, de la bielle 14 et du levier de commande 15, chacun des axes mécaniques 3 ou 16, servant d'articulation, peut indifféremment être adapté, comme représenté en fig. 3 pour l'axe mécanique 3, et servir ainsi de «broche à casser» pour laquelle il est possible de détecter une déformation déterminée pour tenter d'éviter sa rupture.

## Revendications

1. Procédé de détection de défaut d'alignement d'un arbre mécanique (3) soumis à des efforts de flexion et/ou de cisaillement, par contrôle de l'alignement d'un canal central (4) ménagé dans l'arbre (3), caractérisé en ce que ledit contrôle est effectué en dirigeant un faisceau lumineux à travers vers le canal central (4) et en détectant une déviation dudit faisceau.

2. Dispositif de détection pour exécuter le procédé selon la revendication 1, comportant un capteur (1, 2) disposé à l'intérieur d'un canal central (4) ménagé dans un arbre (3) à surveiller, caractérisé en ce que le capteur comprend une cellule photoélectrique émettrice (1) et une cellule photoélectrique réceptrice (2), les deux cellules étant enfilées coaxialement dans le canal central (4) et étant séparées l'une de l'autre.

3. Dispositif de détection selon la revendication 2, caractérisé en ce qu'au moins un diaphragme (5) est disposé entre les deux cellules (1, 2).

4. Dispositif de détection pour exécuter le procédé selon la revendication 1, comportant un capteur (8, 11) disposé à l'intérieur d'un canal central (4) ménagé dans un arbre (3) à surveiller, caractérisé en ce que le capteur comprend d'une part, une cellule photoélectrique (8) présentant une partie émettrice (9) et une partie réceptrice (10) et d'autre part, un miroir (11), la cellule photoélectrique et le miroir étant enfilés coaxialement dans le canal central (4) et étant separés l'un de l'autre.

5. Dispositif de détection selon la revendication 4, caractérisé en ce qu'au moins un diaphragme (5) est disposé entre la cellule photoélectrique (8) et le miroir (11).

6. Dispositif de détection selon les revendications 2 ou 3, caractérisé en ce que l'arbre (3) à surveiller présente une section résistante localement réduite (7) et en ce que les deux cellules photoélectriques, l'une émettrice (1), l'autre réceptrice (2) sont logées de part et d'autre de la section réduite (7) de l'arbre (3).

7. Dispositif de détection selon les revendications 4 ou 5, caractérisé en ce que l'arbre (3) à surveiller présente une section résistante localement réduite (7) et en ce que le miroir (11) et la cellule photoélectrique (8) sont logés de part et d'autre de la section réduite (7) de l'arbre (3).

8. Dispositif de détection selon une des revendications 2 à 7, caractérisé en ce que l'arbre à surveiller est un axe mécanique (3) sur lequel s'articulent la biellette (14) et le levier de commande (15) de l'aube directrice (13) d'un distributeur de turbine hydraulique.

9. Dispositif de détection selon la revendication 8, caractérisé en ce que l'arbre à surveiller est un axe mécanique (16) qui sert d'articulation entre le cercle de vannage (12) et la biellette (14) du distributeur.

## Claims

1. Method for detecting misalignment of a mechanical shaft (3) subjected to bending and/or shearing stresses, by monitoring the alignment of a central duct (4) provided in the shaft (3), characterised in that said monitoring is carried out by directing a light beam through the central duct (4) and detecting any deviation of the said beam.

2. Detecting apparatus for carrying out the method according to claim 1, comprising a pickup (1, 2) arranged within a central duct (4) arranged in a shaft (3) which is to be monitored, characterised in that the pickup comprises a transmitting photoelectric cell (1) and a receiving photoelectric cell (2), the two cells being inserted coaxially in the central duct (4) and being separated from one another.

3. Detecting apparatus according to claim 2, characterised in that at least one diaphragm (5) is arranged between the two cells (1, 2).

4. Detecting apparatus for carrying out the method according to claim 1, comprising a pickup (8, 11) arranged within a central duct (4) arranged in a shaft (3) to be supervised, characterised in that the pickup comprises on the one hand a photoelectric cell including a transmitting part (9) and a receiving part (10) and on the other hand a mirror (11), the photoelectric cell and the mirror being inserted coaxially in the central duct (4) and being separated from one another.

5. Detecting apparatus according to claim 4, characterised in that at least one diaphragm (5) is arranged between the photoelectric cell (8) and the mirror (11).

6. Detecting apparatus according to claim 2 or 3, characterised in that the shaft (3) to be monitored has a locally reduced weakened cross-section (7) and in that the two photoelectric cells, the one a transmitter (1) and the other a receiver (2), are accomodated one on either side of the reduced cross-section (7) of the shaft (3).

7. Detecting apparatus according to claim 4 or 5, characterised in that the shaft (3) being monitored has a locally reduced weakened cross-section (7) and in that the mirror (11) and the photoelectric cell (8) are accomodated one at each side of the reduced cross-section (7) of the shaft (3).

8. Detecting apparatus according to one of claims 2 to 7, characterised in that the shaft to be monitored is a pivot (3) on which there are articulated the rod (14) and the control lever (15) of the guide vane (13) of a hydraulic turbine distributor.

9. Detecting apparatus according to claim 8, characterised in that the shaft to be monitored is a pivot (16) serving as an articulation between the gating ring (12) and the rod (14) of the distributor.

**Patentansprüche**

1. Verfahren zum Feststellen von Spurfehlern einer mechanischen Welle (3), die einer Biege- und/oder Scherbeanspruchung unterworfen wird, durch Kontrolle der Ausrichtung eines zentralen Kanals (4), der in der Welle (3) angebracht ist, dadurch gekennzeichnet, dass zur Ausführung dieser Kontrolle ein Lichtbündel durch den zentralen Kanal (4) geschickt wird und eine Abweichung des besagten Lichtbündels festgestellt wird.

2. Feststellvorrichtung zur Ausführung des Verfahrens gemäss Anspruch 1, aus einer Messeinrichtung (1, 2), die in einem zentralen Kanal (4) angeordnet ist, der in einer zu überwachenden Welle (3) angebracht ist, dadurch gekennzeichnet, dass die Messeinrichtung aus einer photoelektrischen Sendezelle (1), und einer photoelektrischen Empfangszelle (2) besteht, wobei die zwei Zellen koaxial in dem zentralen Kanal (4) angeordnet und voneinander getrennt sind.

3. Feststellvorrichtung gemäss Anspruch 2, dadurch gekennzeichnet, dass mindestens eine Blende (5) zwischen den zwei Zellen (1, 2) angeordnet ist.

4. Feststellvorrichtung zur Ausführung des Verfahrens gemäss Anspruch 1, aus einer Messeinrichtung (8, 11), die in einem zentralen Kanal (4) angeordnet ist, der in einer zu überwachenden Welle (3) angebracht ist, dadurch gekennzeichnet, dass die Messeinrichtung einerseits aus einer photoelektrischen Zelle (8) mit einem Sendeteil (9) und einem Empfangsteil (10), und andererseits aus einem Spiegel (11) besteht, wobei die photoelektrische Zelle und der Spiegel in dem zentralen Kanal (4) koaxial angeordnet und voneinander getrennt sind.

5. Feststellvorrichtung gemäss Anspruch 4, dadurch gekennzeichnet, dass mindestens eine Blende (5) zwischen der photoelektrischen Zelle (8) und dem Spiegel (11) angeordnet ist.

6. Feststellvorrichtung gemäss Anspruch 2 oder 3, dadurch gekennzeichnet, dass die zu überwachende Welle (3) einen örtlich verminderten Bruchquerschnitt (7) aufweist, und dass die zwei photoelektrischen Zellen, nämlich die Sendezelle (1), und die Empfangszelle (2), zu beiden Seiten des verminderten Querschnitts (7) der Welle (3) angeordnet sind.

7. Feststellvorrichtung gemäss Anspruch 4 oder 5, dadurch gekennzeichnet, dass die zu überwachende Welle (3) einen örtlich verminderten Bruchquerschnitt (7) aufweist, und dass der Spiegel (11) und die photoelektrische Zelle (8) zu beiden Seiten des verminderten Querschnitts (7) der Welle (3) angeordnet sind.

8. Feststellvorrichtung gemäss einem der Ansprüche 2 bis 7, dadurch gekennzeichnet, dass die zu überwachende Welle eine mechanische Achse (3) ist, um die die Pleuelstange (14) und der Steuerhebel (15) der Leitschaufel (13) eines Wasserturbinen-Leitapparates geschwenkt werden können.

9. Feststellvorrichtung gemäss Anspruch 8, dadurch gekennzeichnet, dass die zu überwachende Welle eine mechanische Achse (16) ist, die als Gelenkverbindung zwischen dem Schleusenschieber-Kranz (12) und der Pleuelstange (14) des Leitapparates dient.

Fig.1

Fig.2

Fig. 3